# EUROPEAN PATENT APPLICATION

(11) **EP 4 657 613 A1**
(43) Date of publication of application: **03.12.2025**
(21) Application number: 24853124.6
(22) Date of filing: 23.01.2024
(51) Int. Cl.: H01M 10/658

(54) **BATTERY CELL, BATTERY, AND ELECTRIC DEVICE**

(30) Priority: 11.08.2023 CN 202311013229
(71) Applicant: Contemporary Amperex Technology Co., Limited, Ningde, Fujian 352100 (CN)
(72) Inventor: YAO, Meng, Ningde, Fujian 352100 (CN); MA, Yunjian, Ningde, Fujian 352100 (CN); LI, Mei, Ningde, Fujian 352100 (CN); YU, Honggang, Ningde, Fujian 352100 (CN); JIN, Haizu, Ningde, Fujian 352100 (CN); TANG, Daichun, Ningde, Fujian 352100 (CN); YANG, Rui, Ningde, Fujian 352100 (CN); ZHAO, Zimeng, Ningde, Fujian 352100 (CN)
(74) Representative: Ziebig Hengelhaupt Intellectual Property Attorneys Patentanwaltskanzlei PartGmbB
(86) International application number: PCT/CN2024/073706
(87) International publication number: WO 2025/035707

(57) **Abstract**

This application pertains to the field of battery (100) technology and provides a battery cell (10), a battery (100), and an electric apparatus. The electric apparatus includes the battery (100), where the battery (100) includes a battery cell (10), and the battery cell (10) includes an electrode assembly (11), a first electrode terminal (13a), a first adapter (14a), and a heat-insulating structure (15). The electrode assembly (11) includes a body portion (111) and a first tab (112a) provided on the body portion (111). The first adapter (14a) is conductively connected to the first tab (112a) and the first electrode terminal (13a). At least a portion of the heat-insulating structure (15) is provided on a side of the first adapter (14a) facing the body portion (111), so that the first adapter (14a) can be isolated from the body portion (111), mitigating the issue of contact between the first adapter (14a) and the body portion (111), thereby mitigating the issue of the first adapter (14a) scorching or melting a separator of the body portion (111) and causing a short circuit in the electrode assembly (11).

## Description

### CROSS-REFERENCE TO RELATED APPLICATIONS

This application claims priority to Chinese Patent Application No. 202311013229.4, filed with the China National Intellectual Property Administration on August 11, 2023 and entitled "BATTERY CELL, BATTERY, AND ELECTRIC APPARATUS", which is incorporated herein by reference in its entirety.

### TECHNICAL FIELD

This application relates to the field of battery technology, and specifically to, a battery cell, a battery, and an electric apparatus.

### BACKGROUND

In related art, a battery cell includes an electrode assembly, an electrode terminal, and an adapter. The adapter is welded to a tab of the electrode assembly and the electrode terminal so as to achieve conduction between the electrode assembly and the electrode terminal. Thus, the adapter can achieve current flow between the electrode assembly and the electrode terminal, and the adapter generates heat during current flow.

In some cases, the adapter is in contact with a body portion of the electrode assembly, such that heat generated by the adapter is transferred to the body portion of the electrode assembly, resulting in a risk of a short circuit in the electrode assembly caused by melting of a separator of the electrode assembly.

### SUMMARY

In view of the above issues, embodiments of this application are intended to provide a battery cell, a battery, and an electric apparatus, capable of addressing the technical issue of the adapter melting the electrode assembly and causing a short circuit in the electrode assembly.

The technical solutions adopted by the embodiments of this application are described below.

According to a first aspect, an embodiment of this application provides a battery cell, including:
an electrode assembly including a body portion and a first tab provided on the body portion;
a first electrode terminal;
a first adapter conductively connected to the first tab and the first electrode terminal; and
a heat-insulating structure with at least a portion provided on a side of the first adapter facing the body portion.

In the battery cell provided by this embodiment of this application, the heat-insulating structure is provided on the side of the first adapter facing the body portion, reducing heat conduction between the body portion and the first adapter to some extent, thereby mitigating the issue of melting of the body portion caused by heat transferred from the first adapter to the body portion, and consequently reducing the risk of a short circuit in the electrode assembly.

In some embodiments, a thermal conductivity of the heat-insulating structure is ≤ 0.7 W/m·K.

Such a configuration allows the heat-insulating structure to have a low thermal conductivity, reducing heat conduction between the first adapter and the body portion, thereby reducing the risk of a short circuit in the electrode assembly.

In some embodiments, the heat-insulating structure has insulating properties.

Such a configuration allows the heat-insulating structure to also provide insulation between the first adapter and the body portion, thereby mitigating the issue of a direct short circuit in the electrode assembly caused by direct conduction between the first adapter and the body portion.

In some embodiments, the heat-insulating structure includes one or more of a copolymer of perfluoropropyl vinyl ether and polytetrafluoroethylene, mica, ceramic, glass fiber, carbon fiber, a carbon-carbon composite material, or pre-oxidized fiber aerogel.

The above materials are used for the heat-insulating structure, so that the heat-insulating structure is a high-temperature-resistant structure with a high melting point and a low thermal conductivity, and the heat-insulating structure also has insulating properties.

In some embodiments, the heat-insulating structure is a coating layer.

Such a configuration allows a forming process of the heat-insulating structure to be very simple.

In some embodiments, the first adapter is provided with a first position, the first tab is connected to the first position, and the heat-insulating structure is arranged to avoid the first position.

Such a configuration can reduce the heat-insulating structure and facilitate the provision of the heat-insulating structure on the basis that the heat-insulating structure can reduce heat conduction between the first adapter and the body portion.

In some embodiments, the first adapter is provided with a plurality of first positions spaced apart, and the first tab is connected to the plurality of first positions.

Thus, on one hand, this allows for a more uniform current distribution between the first adapter and the first tab, thereby reducing the current flow temperature of the first adapter. On the other hand, this allows for a high current-carrying capacity between the first adapter and the first tab.

In some embodiments, the battery cell further includes a housing; the electrode assembly, the first adapter, and the heat-insulating structure are all disposed within the housing; the housing is provided with an electrolyte injection hole; and the first position is located on a side of the first electrode terminal away from the electrolyte injection hole.

The first position is located on the side of the first electrode terminal away from the electrolyte injection hole, so that the first adapter can be arranged as far as possible from the electrolyte injection hole, thereby preventing the first adapter from interfering with the operation of the electrolyte injection hole to some extent.

In some embodiments, the housing is provided with a first wall, and the electrolyte injection hole and the first electrode terminal are spaced apart on the first wall.

Such a configuration allows the positions of the first adapter, the first electrode terminal, and the electrolyte injection hole to be arranged compactly, and ensures that the first adapter does not interfere with the injection of an electrolyte into the housing.

In some embodiments, the first tab includes a plurality of first sub-tabs, the plurality of first sub-tabs are connected to form a first connection structure, and at least a portion of the first connection structure is connected to the first position.

The first tab is pre-connected to form the first connection structure, and then the first connection structure is conductively connected to the first position, so that the first tab can be effectively conductively connected to the first adapter.

In some embodiments, a total area of all the first positions accounts for 10% to 25% of an area of the side of the first adapter facing the body portion.

This allows a connection position between the first adapter and the first tab to have a high current-carrying capacity, allowing the first adapter to be at a lower temperature when current normally flows through the first adapter, thereby reducing the risk of melting of a separator of the body portion. Additionally, the first adapter can also reserve some space for providing a fuse region, enabling effective fusing of the fuse region in the event of a short circuit in the first adapter.

In some embodiments, the first adapter is provided with a positioning through-hole; the first electrode terminal is inserted into the positioning through-hole; and a portion of the heat-insulating structure is provided on a side of the first electrode terminal facing the body portion.

Providing the heat-insulating structure on the side of the first electrode terminal facing the body portion can isolate the first electrode terminal from the body portion.

In some embodiments, the electrode assembly further includes a second tab provided on the body portion; the battery cell further includes a second electrode terminal and a second adapter; and the second adapter is conductively connected to the second tab and the second electrode terminal.

Such a configuration allows for indirect conductive connections between the first tab and the first electrode terminal and between the second tab and the second electrode terminal through the adapter, facilitating the assembly of the battery cell.

In some embodiments, the first tab is a positive electrode tab, and the second tab is a negative electrode tab.

The heat-insulating structure is provided on the first adapter which is configured to be conductively connected to the positive electrode tab and the positive electrode terminal, so that the issue of the first adapter scorching or even melting the separator can be mitigated, thereby effectively mitigating the issue of a short circuit in the battery cell.

In some embodiments, a portion of the heat-insulating structure is provided on a side of the second adapter facing the body portion.

Such a configuration allows the heat-insulating structure to reduce heat conduction between the second adapter and the body portion, mitigating the issue of scorching or even melting of the separator caused by direct contact between the second adapter and the body portion.

In some embodiments, the second adapter is provided with a second position, the second tab is connected to the second position, and the heat-insulating structure is arranged to avoid the second position.

This can reduce the heat-insulating structure and facilitate the provision of the heat-insulating structure on the basis that the heat-insulating structure can reduce heat conduction between the second adapter and the body portion.

In some embodiments, the second adapter is provided with a plurality of second positions spaced apart, and the second tab is connected to the plurality of second positions.

Thus, on one hand, this allows for a more uniform current distribution between the second adapter and the second tab, thereby reducing the current flow temperature of the second adapter. On the other hand, this provides a high current-carrying capacity between the second adapter and the second tab. Additionally, this can reduce the dimension of the second tab in a first direction, thereby helping to increase the energy density of the battery cell.

In some embodiments, at least a portion of the second electrode terminal is located between two second positions.

Such a configuration ensures that the plurality of second positions of the second adapter connected to the second tab are more dispersed, resulting in a more uniform current within the battery cell, thereby reducing the current flow temperature of the second adapter, and consequently reducing the risk of melting of the separator caused by the second adapter.

In some embodiments, the second tab includes a plurality of second sub-tabs, the plurality of second sub-tabs are connected to form a second connection structure, and at least a portion of the second connection structure is connected to the second position.

The plurality of second sub-tabs of the second tab are connected to form the second connection structure, and then the second connection structure is conductively connected to the second position, so that the second tab can be effectively conductively connected to the second adapter.

In some embodiments, the plurality of second sub-tabs are connected to form a plurality of second connection structures spaced apart, and each second connection structure is connected to a corresponding second position.

The plurality of second sub-tabs of the second tab are connected to form the plurality of second connection structures, such that each second connection structure is connected to a respective second position of the second adapter, allowing for a more uniform current distribution between the second adapter and the second tab, thereby reducing the current flow temperature of the second adapter, and consequently reducing the risk of a short circuit in the battery cell caused by melting of the separator.

In some embodiments, a total area of all the second positions accounts for 10% to 25% of an area of the side of the second adapter facing the body portion.

This allows a connection position between the second adapter and the second tab to have a current-carrying capacity, allowing the second adapter to be at a lower temperature when current normally flows through the second adapter, thereby reducing the risk of melting of the separator of the body portion. Additionally, the second adapter can also reserve some space for providing a fuse region, enabling effective fusing of the fuse region in the event of a short circuit in the second adapter.

In some embodiments, the battery cell further includes a housing; the electrode assembly, the first adapter, the second adapter, and the heat-insulating structure are all disposed within the housing; and
the first tab and the second tab are respectively provided at two opposite ends of the body portion along the first direction; the housing is provided with a first wall and a second wall at the two opposite ends along the first direction; the first electrode terminal is provided on the first wall; the second electrode terminal is provided on the second wall; and along the first direction, the first adapter is provided between the first wall and the first tab, and the second adapter is provided between the second wall and the second tab.

Adopting the above technical solution makes the overall arrangement of the battery cell reasonable.

According to a second aspect, an embodiment of this application provides a battery including a battery cell.

The battery provided by this embodiment of this application adopts the above-mentioned battery cell, so that the issue of melting of a separator of the battery cell can be mitigated, thereby reducing the risk of a short circuit in the battery.

According to a third aspect, an embodiment of this application provides an electric apparatus including a battery cell or a battery.

The electric apparatus provided by this embodiment of this application adopts the above-mentioned battery cell or battery, so that the issue of melting of a separator of the battery cell can be mitigated, thereby reducing the risk of a short circuit in the battery.

The foregoing description is merely an overview of the technical solutions of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or exemplary technologies. Apparently, the accompanying drawings in the following description show merely some embodiments of this application, and persons of ordinary skill in the art may still derive other drawings from these accompanying drawings without creative efforts.
FIG. 1 is a schematic diagram of a vehicle according to some embodiments of this application;
FIG. 2 is a schematic exploded view of a battery according to some embodiments of this application;
FIG. 3 is a cross-sectional view of a battery cell according to some embodiments of this application;
FIG. 4 is an enlarged view of portion A in FIG. 3;
FIG. 5 is a bottom view of fit of a housing, a first adapter, a first electrode terminal, and a first heat-insulating member of the battery cell provided in FIG. 3;
FIG. 6 is an enlarged view of portion B in FIG. 3; and
FIG. 7 is a top view of fit of a housing, a second adapter, a second electrode terminal, and a second heat-insulating member of the battery cell provided in FIG. 3.

In the drawings, the reference signs are as follows:
1000. vehicle; 100. battery; 200. controller; 300. motor; 10. battery cell; 20. box; 21. first portion; 22. second portion; 11. electrode assembly; 111. body portion; 112. tab; 112a. first tab; 1121a. first connection structure; 112b. second tab; 1121b. second connection structure; 12. housing; 1201. electrolyte injection hole; 121. housing body; 122. end cover; 122a. first wall; 122b. second wall; 13. electrode terminal; 13a. first electrode terminal; 13b. second electrode terminal; 14. adapter; 1401. first position; 1402. second position; 1403. first positioning through-hole; 1404. second positioning through-hole; 14a. first adapter; 14b. second adapter; 15. heat-insulating structure; 151. first heat-insulating member; 152. second heat-insulating member; Y. first direction; and X. second direction.

### DESCRIPTION OF EMBODIMENTS

The following describes the embodiments of this disclosure in detail. Examples of the embodiments are shown in the accompanying drawings. Throughout the accompanying drawings, the same or similar reference signs indicate the same or similar components or components with the same or similar functions. The embodiments described below with reference to the drawings are illustrative and merely for explaining this application. They should not be construed as limitations on this application.

In the description of this application, the orientations or positional relationships indicated by the technical terms "length", "width", "upper", "lower", "front", "rear", "left", "right", "vertical", "horizontal", "top", "bottom", "inside", "outside", and the like are based on the orientations or positional relationships as shown in the accompanying drawings. These terms are merely for the ease and brevity of description of the embodiments of this application rather than indicating or implying that the means or components mentioned must have specific orientations or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. Therefore, a feature limited by "first" or "second" may explicitly or implicitly include one or more such features.

In the description of this application, "a plurality of' means two or more. Unless otherwise specifically stated, "two or more" includes two. Correspondingly, "a plurality of groups" means two or more groups, including two groups.

In the description of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of this application, the term "and/or" is only an associative relationship for describing associated objects, indicating that three relationships may be present. For example, A and/or B may indicate the following three cases: presence of A, presence of both A and B, and presence of B. Additionally, in this application, the character "/" generally indicates that the associated objects before and after are in an "or" relationship.

Although this application has been described with reference to preferred embodiments, various improvements can be made thereto, and components therein can be replaced with equivalents without departing from the scope of this application. In particular, as long as there is no structural conflict, the technical features mentioned in the various embodiments can be combined in any manner. This application is not limited to the specific embodiments disclosed in this specification but includes all technical solutions falling within the scope of the claims.

A battery cell typically includes an electrode assembly, an electrode terminal, and an adapter. The adapter is welded to a tab of the electrode assembly and the electrode terminal so as to achieve conduction between the electrode assembly and the electrode terminal. Thus, the adapter can achieve current flow between the electrode assembly and the electrode terminal.

It should be noted that the adapter generates heat during current flow. In some cases, the adapter is in contact with a body portion of the electrode assembly, such that heat generated by the adapter is transferred to the body portion of the electrode assembly, resulting in a risk of a short circuit in the electrode assembly caused by melting of a separator of the electrode assembly. In particular, when a short circuit occurs in the battery cell, the current within the adapter increases sharply, and energy is released rapidly, causing a significant temperature increase within the adapter. Based on this, when the adapter is in contact with the body portion of the electrode assembly, a separator of the body portion is highly prone to scorching or even melting.

In related art, the tab of the electrode assembly is welded to the adapter, so that the tab can provide some avoidance space between the body portion of the electrode assembly and the adapter, thereby mitigating the issue of direct contact between the adapter and the body portion. However, under conditions such as gas generation in the electrode assembly, severe vibration, or a sharp increase in internal temperature of the electrode assembly, heat from the adapter is still easily transferred to the body portion of the electrode assembly, leading to a short circuit in the electrode assembly.

Based on the above considerations, embodiments of this application provide a battery cell, a battery, and an electric apparatus. A heat-insulating structure is provided on a side of a first adapter facing a body portion, so that heat conduction between the body portion and the first adapter can be reduced to some extent, mitigating the issue of melting of the body portion caused by heat transferred from the first adapter to the body portion, thereby reducing the risk of a short circuit in an electrode assembly.

In some embodiments, the battery cell involved in the embodiments of this application can be used in an electric apparatus that uses the battery cell or battery as a power source, and the battery involved in the embodiments of this application can be used in an electric apparatus that uses the battery as a power source.

The electric apparatus may include but is not limited to a mobile phone, a tablet computer, a laptop computer, an electric toy, an electric tool, an electric bicycle, an electric vehicle, a ship, and a spacecraft. The electric toy may be a fixed or mobile electric toy, for example, a game console, an electric toy car, an electric toy ship, or an electric toy airplane. The spacecraft may include an airplane, a rocket, a space shuttle, a spaceship, and the like. The vehicle may be a fuel vehicle, a gas vehicle, or a new energy vehicle, and the new energy vehicle may be a battery electric vehicle, a hybrid electric vehicle, or an extended-range vehicle.

In some embodiments, the battery cell and battery involved in the embodiments of this application can also be used in an energy storage apparatus. The energy storage apparatus may be an energy storage container, an energy storage cabinet, or the like.

The battery involved in the embodiments of this application may refer to a single physical module that includes one or more battery cells for providing a higher voltage and capacity. When a plurality of battery cells are provided, the plurality of battery cells are connected in series, parallel, or series-parallel via a busbar, where being connected in series-parallel means a combination of series and parallel connections of the plurality of battery cells.

In some embodiments, the battery may be a battery module. When a plurality of battery cells are provided, the plurality of battery cells are arranged and fixed to form a battery module. As an example, the plurality of battery cells may be fixed using a rolling strip or the like to form a battery module. As an example, the plurality of battery cells may alternatively be fixed using one end plate, a side plate, or the like to form a battery module.

In some embodiments, the battery may be a battery pack, and the battery pack may include a box and a battery cell. As an example, the battery cell may be directly accommodated in the box. As an example, the battery cell may form a battery module first and then be accommodated in the box.

For ease of description, an electric apparatus being a vehicle is used as an example for description of the embodiments of this application.

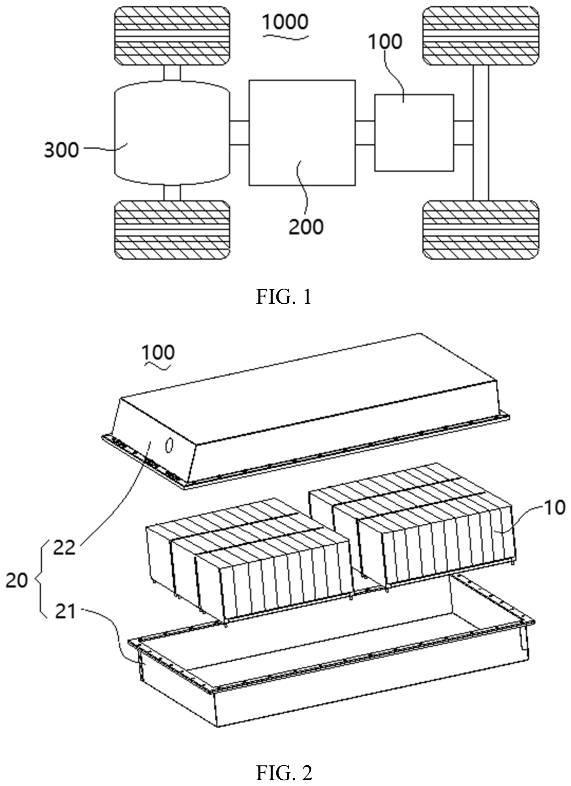

Referring to FIG. 1, FIG. 1 is a schematic diagram of a vehicle 1000 according to some embodiments of this application. The vehicle 1000 is internally provided with the above-mentioned battery 100, and the battery 100 may be arranged at the bottom, head, or tail of the vehicle 1000. The battery 100 can be configured to supply power to the vehicle 1000, for example, the battery 100 can serve as an operational power source for the vehicle 1000. The vehicle 1000 may further include a controller 200 and a motor 300, and the controller 200 is configured to control the battery 100 to supply power to the motor 300, for example, to satisfy power needs of start, navigation, and driving of the vehicle 1000.

In some embodiments, the battery 100 can serve not only as an operational power source for the vehicle 1000 but also as a driving power source for the vehicle 1000, replacing or partially replacing fuel or natural gas to provide driving traction for the vehicle 1000.

Referring to FIG. 2, FIG. 2 is an exploded view of a battery 100 according to some embodiments of this application. The battery 100 includes a box 20 and a plurality of battery cells 10. The box 20 is a structure with an accommodating space inside, and the box 20 can adopt various structures. In some embodiments, the box 20 may include a first portion 21 and a second portion 22, where the first portion 21 and the second portion 22 fit each other to jointly define the above-mentioned accommodating space. The first portion 21 may be a hollow structure with an opening at one end, and the second portion 22 may be a plate-like structure. The second portion 22 covers the opening side of the first portion 21, such that the first portion 21 and the second portion 22 jointly define the above-mentioned accommodating space. Alternatively, as shown in FIG. 2, the first portion 21 and the second portion 22 may each be a hollow structure with an opening at one end, and an opening side of the first portion 21 is engaged with an opening side of the second portion 22, such that the first portion 21 and the second portion 22 jointly define the above-mentioned accommodating space. The box 20 formed by the first portion 21 and the second portion 22 may have various shapes such as a cylinder or a cuboid.

In some embodiments, a plurality of battery cells 10 may be connected in series, parallel, or series-parallel to form an entirety, and the entirety formed by the plurality of battery cells 10 is directly accommodated in the above-mentioned accommodating space of the box 20, as shown in FIG. 2. Alternatively, a plurality of battery cells 10 may first be connected in series, parallel, or series-parallel and arranged and fixed to form a plurality of battery modules, and the plurality of battery modules are then connected in series, parallel, or series-parallel to form an entirety which is accommodated in the above-mentioned accommodating space of the box 20.

In some embodiments, referring to FIG. 1 and FIG. 2, when the battery 100 is applied to the vehicle 1000, the box 20 of the battery 100 may serve as a part of a chassis structure of the vehicle 1000. For example, a portion of the box 20 may form at least a part of the chassis of the vehicle 1000, or a portion of the box 20 may form at least a part of each of a cross beam and a longitudinal beam of the vehicle 1000.

A battery cell 10 refers to the smallest unit for storing and outputting electrical energy. The battery cell 10 may be a secondary battery or a primary battery. The battery cell 10 may include but is not limited to a metal battery, a lithium-sulfur battery, a sodium-ion battery, or a magnesium-ion battery. The battery cell 10 may have a cylindrical shape, a flat shape, a cuboid shape, or other shapes.

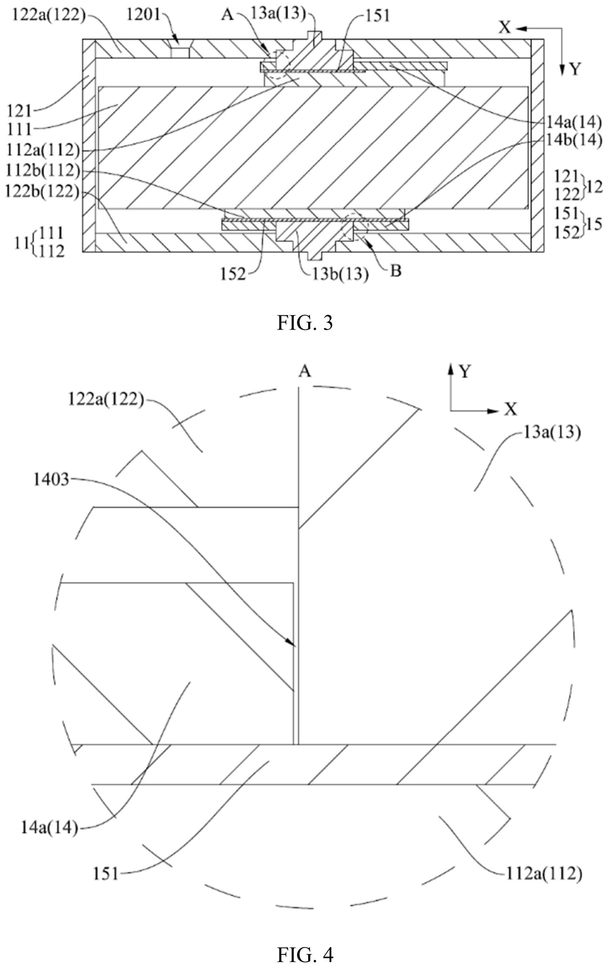

Referring to FIG. 3, FIG. 3 is a cross-sectional view of a battery cell 10 according to some embodiments of this application. The battery cell 10 includes an electrode assembly 11, a housing 12, and an electrode terminal 13.

The electrode assembly 11 is a component in the battery cell 10 where electrochemical reactions occur. The electrode assembly 11 is mainly formed by winding or stacking a positive electrode plate and a negative electrode plate, and a separator is provided between the positive electrode plate and the negative electrode plate. Portions of the positive electrode plate and the negative electrode plate containing active materials constitute a body portion 111 of the electrode assembly 11, and portions of the positive electrode plate and the negative electrode plate without active materials each constitute a tab 112. The tab 112 of the positive electrode plate is a positive electrode tab, and the tab 112 of the negative electrode plate is a negative electrode tab. The positive electrode tab and the negative electrode tab may be located together at one end of the body portion or respectively located at two opposite ends of the body portion 111.

In the battery cell 10, one or more electrode assemblies 11 may be provided.

In some cases, the electrode assembly 11 may also be referred to as a bare cell, a wound body, a stacked body, or the like.

In some embodiments, the battery cell 10 may further include an electrolyte. The electrolyte conducts ions between the positive electrode plate and the negative electrode plate. The electrolyte involved in the embodiments of this application may be in a liquid state, a gel state, or a solid state.

The housing 12 may include a housing body 121 and one end cover 122, where the housing body 121 and the end cover 122 are components that jointly define an internal environment of the battery cell 10, and the internal environment defined by the housing body 121 and the end cover 122 is used for accommodating the electrode assembly 11 and the electrolyte. The housing body 121 and the end cover 122 may be independent components; specifically, the housing body 121 has an opening, and the end cover 122 covers the opening of the housing body 121, thereby jointly defining the internal environment of the battery cell 10 with the housing body 121, and isolating the internal environment of the battery cell 10 from the external environment. Alternatively, the housing body 121 and the end cover 122 may be an integrated structure; specifically, a common connection surface may be formed between the end cover 122 and the housing body 121 before the electrode assembly 11 is placed into the housing body, and when the electrode assembly 11 needs to be encapsulated after the electrode assembly 11 is placed into the housing body, the end cover 122 covers the housing body 121.

One end cover 122 may be provided. Alternatively, two end covers 122 may be provided, and the two end covers 122 are respectively provided at two opposite ends of the housing body 121.

The housing body 121 may have a cylindrical shape, a square shape, or the like, which can be specifically determined based on the specific shape and size of the electrode assembly 11. The housing body 121 and the end cover 122 may also be made of various materials such as copper, iron, aluminum, stainless steel, aluminum alloy, and plastic.

The electrode terminal 13 refers to a component with conductive properties. The electrode terminal 13 serves as a current transmission terminal of the battery cell 10 for transmitting current. The electrode terminal 13 may include but is not limited to a pole.

The electrode terminal 13 is conductively connected to the tab 112. Specifically, the electrode terminal 13 may be directly conductively connected to the tab 112. For example, the electrode terminal 13 is welded to the tab 112. Alternatively, an adapter 14 may be provided between the electrode terminal 13 and the tab 112, and the adapter 14 achieves adapting connection between the electrode terminal 13 and the tab 112 to enable current flow, thereby indirectly achieving conductive connection between the electrode terminal 13 and the tab 112. The adapter 14 refers to a metal structure with conductive properties. For example, the adapter 14 may be but is not limited to a copper bar. The adapter 14 is disposed within the housing 12.

There are two electrode terminals 13, and the two electrode terminals 13 are a positive electrode terminal and a negative electrode terminal respectively, where the positive electrode terminal is conductively connected to the positive electrode tab, and the negative electrode terminal is conductively connected to the negative electrode tab.

The electrode terminal 13 is provided on the housing 12. Specifically, the electrode terminal 13 may be provided on the housing body 121 of the housing 12 or provided on the end cover 122 of the housing 12. For example, both the positive electrode terminal and the negative electrode terminal may be provided on the housing body 121; alternatively, as shown in FIG. 3, both the positive electrode terminal and the negative electrode terminal may be provided on the end cover 122; alternatively, one of the positive electrode terminal and the negative electrode terminal is provided on the housing body 121, and the other is provided on the end cover 122.

The positive electrode terminal and the negative electrode terminal may be provided at the same end of the housing 12; alternatively, as shown in FIG. 3, the positive electrode terminal and the negative electrode terminal may be respectively provided at two opposite ends of the housing 12.

Referring to FIG. 3 and FIG. 4 in conjunction with other drawings, FIG. 4 is an enlarged view of portion A in FIG. 3. The battery cell 10 provided by the embodiments of this application includes an electrode assembly 11, a first electrode terminal 13a, a first adapter 14a, and a heat-insulating structure 15. The electrode assembly 11 includes a body portion 111 and a first tab 112a, and the first tab 112a is provided on the body portion 111. The first adapter 14a is conductively connected to the first tab 112a and the first electrode terminal 13a. At least a portion of the heat-insulating structure 15 is provided on a side of the first adapter 14a facing the body portion 111.

The first tab 112a may be a positive electrode tab or a negative electrode tab.

It can be understood that the electrode assembly 11 further includes a second tab 112b; and the first tab 112a and the second tab 112b are spaced apart on the body portion 111. When the first tab 112a is a positive electrode tab, the second tab 112b is a negative electrode tab. When the first tab 112a is a negative electrode tab, the second tab 112b is a positive electrode tab.

The first electrode terminal 13a is the above-mentioned electrode terminal 13, which is a component with conductive properties and may include but is not limited to a pole. The first electrode terminal 13a serves as a current transmission terminal of the battery cell 10 for transmitting current. When the first tab 112a is a positive electrode tab, the first electrode terminal 13a is a positive electrode terminal, and the first adapter 14a is a positive electrode adapter. When the first tab 112a is a negative electrode tab, the first electrode terminal 13a is a negative electrode terminal, and the first adapter 14a is a negative electrode adapter.

The first adapter 14a is the above-mentioned adapter 14, which is a component with conductive properties and may include but is not limited to a copper bar. The first adapter 14a is configured to achieve adapting connection between the first electrode terminal 13a and the first tab 112a, indirectly achieving conductive connection between the first electrode terminal 13a and the first tab 112a.

The first adapter 14a being conductively connected to the first tab 112a and the first electrode terminal 13a means that the first adapter 14a is conductively connected to the first tab 112a, and the first adapter 14a is conductively connected to the first electrode terminal 13a. The first adapter 14a being conductively connected to the first tab 112a means that the first adapter 14a is connected to the first tab 112a, and the first adapter 14a is in electrical conduction with the first tab 112a. The first adapter 14a being conductively connected to the first electrode terminal 13a means that the first adapter 14a is connected to the first electrode terminal 13a, and the first adapter 14a is in electrical conduction with the first electrode terminal 13a. Based on this, the first adapter 14a can achieve current flow between the first tab 112a and the first electrode terminal 13a.

As an example, the first adapter 14a is welded to the first tab 112a to achieve conductive connection. As an example, the first adapter 14a is welded to the first electrode terminal 13a to achieve conductive connection. The conductive connection between the first adapter 14a and the first tab 112a may be achieved by laser welding, ultrasonic welding, penetration welding, or the like; and the conductive connection between the first adapter 14a and the first electrode terminal 13a may also be achieved by laser welding, ultrasonic welding, penetration welding, or the like.

As shown in FIG. 3 and FIG. 4, the first adapter 14a is provided at the first tab 112a, such that at least a portion of the first adapter 14a faces the body portion 111 of the electrode assembly 11.

The heat-insulating structure 15 refers to a component with heat-insulating functionality. The heat-insulating structure 15 can block heat to reduce the spread of heat. Specifically, at least a portion of the heat-insulating structure 15 is provided on the side of the first adapter 14a facing the body portion 111, such that the heat-insulating structure 15 can separate the first adapter 14a from the body portion 111, preventing direct contact between the first adapter 14a and the body portion 111 to some extent. Additionally, the heat-insulating structure 15 can isolate heat between the first adapter 14a and the body portion 111, thereby mitigating the issue of heat spreading from the first adapter 14a to the body portion 111.

It can be understood that the heat-insulating structure 15 may include a first heat-insulating member 151, where the first heat-insulating member 151 is the portion of the heat-insulating structure 15 provided on the side of the first adapter 14a facing the body portion 111. That is, the first heat-insulating member 151 is a part of the heat-insulating structure 15 and also has heat-insulating functionality.

As an example, as shown in FIG. 3 and FIG. 4, the first tab 112a is provided at one end of the body portion 111 along a first direction Y. In the first direction Y, the first adapter 14a is provided at one end of the first tab 112a away from the body portion, and the first adapter 14a is conductively connected to the first electrode terminal 13a and the first tab 112a. At least a portion of the first adapter 14a faces the body portion 111 along the first direction Y. Additionally, at least a portion of the heat-insulating structure 15 is provided on the side of the first adapter 14a facing the body portion 111 along the first direction Y. Thus, due to the separating effect of the heat-insulating structure 15, the first adapter 14a cannot be in direct contact with the body portion 111, that is, the heat-insulating structure 15 can mitigate the issue of direct contact between the first adapter 14a and the body portion 111. Additionally, the heat-insulating structure 15 can isolate heat between the first adapter 14a and the body portion 111, thereby mitigating the issue of scorching or melting of a separator caused by heat transferred from the first adapter 14a to the body portion 111.

The first direction Y is a height direction or a length direction of the battery cell 10.

FIG. 3 and FIG. 4 illustrate a planar coordinate system, where the X-axis and the Y-axis are two mutually perpendicular coordinate axes in the planar coordinate system, that is, the Y-axis is perpendicular to the X-axis. The first direction Y is parallel to the Y-axis, and the X-axis is parallel to a second direction X mentioned below, that is, the first direction Y is perpendicular to the second direction X.

The first tab 112a and the second tab 112b may be respectively provided at two opposite ends of the body portion 111 along the first direction Y, or the first tab 112a and the second tab 112b may be spaced apart at the same end of the body portion 111 along the first direction Y.

In the battery cell 10 provided by the embodiments of this application, the first tab 112a is conductively connected to the first adapter 14a, and the first electrode terminal 13a is conductively connected to the first adapter 14a, achieving indirect conductive connection between the first tab 112a and the first electrode terminal 13a. Additionally, the heat-insulating structure 15 is provided on the side of the first adapter 14a facing the body portion 111. This can separate the body portion 111 from the first adapter 14a to some extent, mitigating the issue of direct contact between the first adapter 14a and the body portion 111. Additionally, the heat-insulating structure 15 can reduce heat conduction between the body portion 111 of the electrode assembly 11 and the first adapter 14a, thereby mitigating the issue of melting of the separator of the body portion 111 caused by heat transferred from the first adapter 14a to the body portion 111, and consequently reducing the risk of a short circuit in the electrode assembly 11.

In some embodiments, a thermal conductivity of the heat-insulating structure 15 is ≤ 0.7 W/m·K.

For example, the thermal conductivity of the heat-insulating structure 15 may be 0.7 W/m·K, 0.65 W/m·K, 0.6 W/m·K, 0.55 W/m·K, 0.5 W/m·K, or the like.

The heat-insulating structure 15 is configured as a structure with a low thermal conductivity, so that the heat-insulating structure 15 exhibits a weak heat conduction effect, reducing heat conduction between the first adapter 14a and the body portion 111, thereby mitigating the issue of melting of the separator of the body portion 111, and consequently reducing the risk of a short circuit in the electrode assembly 11.

In some embodiments, the heat-insulating structure 15 has insulating properties.

Such a configuration allows the heat-insulating structure 15 to also provide insulation between the first adapter 14a and the body portion 111, thereby mitigating the issue of a short circuit in the electrode assembly 11 caused by direct conduction between the first adapter 14a and the body portion 111.

In some embodiments, the heat-insulating structure 15 includes one or more of a copolymer of perfluoropropyl vinyl ether and polytetrafluoroethylene, mica, ceramic, glass fiber, carbon fiber, a carbon-carbon composite material, or pre-oxidized fiber aerogel.

It can be understood that the heat-insulating structure 15 may be made of at least one of the above various materials, such that the heat-insulating structure 15 includes at least one of a structure made of a copolymer of perfluoropropyl vinyl ether and polytetrafluoroethylene, a mica structure, a ceramic structure, a glass fiber structure, a carbon fiber structure, a carbon-carbon composite material component, or a pre-oxidized fiber aerogel structure.

The above materials are used for the heat-insulating structure 15, so that the heat-insulating structure 15 is a high-temperature-resistant structure with a high melting point and a low thermal conductivity. This allows the heat-insulating structure 15 to have a good heat-insulating effect, thereby effectively mitigating the issue of scorching or melting of the separator caused by heat transferred from the first adapter 14a to the separator of the body portion 111, and consequently mitigating the issue of a short circuit in the body portion 111. Additionally, the heat-insulating structure 15 has insulating properties, thereby mitigating the issue of a short circuit in the battery cell 10 caused by conduction between the first adapter 14a and the body portion 111.

In some embodiments, the heat-insulating structure 15 is a coating layer.

It can be understood that a coating with heat-insulating properties may be applied to the side of the first adapter 14a facing the body portion 111 to form the heat-insulating structure 15.

Such a configuration allows a forming process of the heat-insulating structure 15 to be very simple.

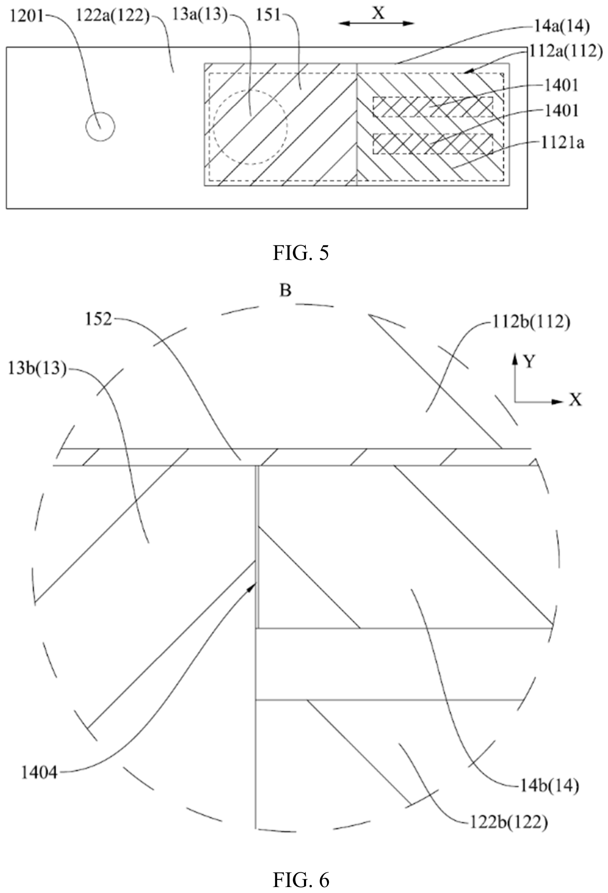

In some embodiments, referring to FIG. 3 to FIG. 5 in conjunction with other drawings, FIG. 5 is a bottom view of the housing 12, the first adapter 14a, first electrode terminal 13a, and first heat-insulating member 151 of the battery cell 10 provided by the embodiments of this application, specifically a view in a direction from a second adapter 14b to the first adapter 14a along the first direction Y. In the bottom view, projections of the first electrode terminal 13a, the first tab 112a, a first connection structure 1121a, and a first position 1401 on the first adapter 14a are shown via dashed lines. The first adapter 14a is provided with the first position 1401, the first tab 112a is connected to the first position 1401, and the heat-insulating structure 15 is arranged to avoid the first position 1401.

The first position 1401 refers to a position of the first adapter 14a configured to be connected to the first tab 112a. Specifically, the first tab 112a is conductively connected to a portion of the first adapter 14a located at the first position 1401.

When the first adapter 14a is welded to the first tab 112a, a weld mark formed by welding the first adapter 14a to the first tab 112a is located at the first position 1401.

This can reduce the heat-insulating structure 15 and facilitate the provision of the heat-insulating structure 15 on the first adapter 14a on the basis that the heat-insulating structure 15 can reduce heat conduction between the first adapter 14a and the body portion 111.

In some embodiments, referring to FIG. 3 to FIG. 5 in conjunction with other drawings, the first adapter 14a is provided with a plurality of first positions 1401 spaced apart, and the first tab 112a is connected to the plurality of first positions 1401.

The first tab 112a is conductively connected to portions corresponding to the plurality of first positions 1401 of the first adapter 14a, so that the first tab 112a is connected to a plurality of different positions of the first adapter 14a. Thus, on one hand, this allows for a more uniform current distribution between the first adapter 14a and the first tab 112a, thereby reducing the current flow temperature of the first adapter 14a, mitigating the issue of heat concentration caused by current concentration in the first adapter 14a, and consequently mitigating the issue of scorching or melting of the separator of the body portion 111 caused by excessive heat from the first adapter 14a, thus reducing the risk of a short circuit in the battery cell 10. On the other hand, this allows for a high current-carrying capacity between the first adapter 14a and the first tab 112a.

In some embodiments, to facilitate conductive connection between the first tab 112a and the first adapter 14a, the first position 1401 is located on the side of the first adapter 14a facing the body portion 111.

In some embodiments, referring to FIG. 3 to FIG. 5 in conjunction with other drawings, the battery cell 10 further includes a housing 12; the electrode assembly 11, the first adapter 14a, and the heat-insulating structure 15 are all disposed within the housing 12; the first electrode terminal 13a is provided on the housing 12; the housing 12 is provided with an electrolyte injection hole 1201; and the first position 1401 is located on a side of the first electrode terminal 13a away from the electrolyte injection hole 1201.

The electrolyte injection hole 1201 refers to a hole used for an electrolyte to enter the internal environment of the battery cell 10. Specifically, the electrolyte injection hole 1201 is a through-hole provided in the housing 12, and the electrolyte injection hole 1201 is in communication with the internal environment defined by the housing 12, such that the electrolyte can be injected into the internal environment defined by the housing 12 through the electrolyte injection hole 1201, allowing the electrolyte to infiltrate the electrode assembly 11 within the internal environment defined by the housing 12. The electrolyte injection hole 1201 may be provided on the housing body 121 of the housing 12 or provided on the end cover 122 of the housing 12.

The first position 1401 is located on the side of the first electrode terminal 13a away from the electrolyte injection hole 1201. It can be understood that in a distribution direction of the first electrode terminal 13a and the electrolyte injection hole 1201, the first position 1401 is located on the side of the first electrode terminal 13a away from the electrolyte injection hole 1201, that is, at least a portion of the first electrode terminal 13a is located between the first position 1401 and the electrolyte injection hole 1201, such that a connection line (straight line) between the electrolyte injection hole 1201 and the first position 1401 can pass through the first electrode terminal 13a. Additionally, a plurality of first positions 1401 are located on the same side of the first electrode terminal 13a away from the electrolyte injection hole 1201, that is, a connection line (straight line) between any two adjacent first positions 1401 does not pass through the first electrode terminal 13a.

As an example, as shown in FIG. 5 in conjunction with other drawings, the first electrode terminal 13a and the electrolyte injection hole 1201 are sequentially distributed along a second direction X.

The first position 1401 is located on the side of the first electrode terminal 13a away from the electrolyte injection hole 1201, the first adapter 14a can be arranged as far as possible from the electrolyte injection hole 1201, thereby preventing the first adapter 14a from interfering with the operation of the electrolyte injection hole 1201.

In some embodiments, referring to FIG. 3 to FIG. 5 in conjunction with other drawings, the housing 12 is provided with a first wall 122a, and the electrolyte injection hole 1201 and the first electrode terminal 13a are spaced apart on the first wall 122a.

It can be understood that the electrolyte injection hole 1201 and the first electrode terminal 13a are spaced apart on the same side wall of the housing 12. For example, the first wall 122a is provided on a side wall of the housing 12 along the first direction Y. In the first direction Y, the first adapter 14a is provided between the first tab 112a and the first wall 122a. Additionally, in the second direction X, the first position 1401 is provided on the side of the first electrode terminal 13 away from the electrolyte injection hole 1201.

The first wall 122a may be the housing body 121 of the housing 12 or the end cover 122 of the housing 12.

Such a configuration allows the positions of the first adapter 14a, the first electrode terminal 13a, and the electrolyte injection hole 1201 to be arranged compactly, helping to increase the energy density of the battery cell 10. Additionally, the first electrode terminal 13a and the electrolyte injection hole 1201 are spaced apart, so that the first adapter 14a is arranged to avoid the electrolyte injection hole 1201. This ensures that the first adapter 14a does not interfere with the injection of an electrolyte into the housing 12.

As shown in FIG. 3 and FIG. 5, the electrolyte injection hole 1201 and the first adapter 14a are spaced apart along the first direction Y. Additionally, the electrolyte injection hole 1201 and the first adapter 14a are also spaced apart along the second direction X, allowing the electrolyte injection hole 1201 and the first adapter 14a to be spaced apart.

In some embodiments, when an area of the first adapter 14a is sufficiently large, the plurality of first positions 1401 may alternatively be distributed on two opposite sides of the first electrode terminal 13a. Specifically, at least a portion of the first electrode terminal 13a is provided between two first positions 1401, that is, a connection line (straight line) between the two first positions 1401 can pass through the first electrode terminal 13a. This allows for a more uniform current distribution in the first adapter 14a, reducing the risk of melting of the separator.

In some embodiments, referring to FIG. 3 to FIG. 5 in conjunction with other drawings, the first tab 112a includes a plurality of first sub-tabs, the plurality of first sub-tabs are connected to form a first connection structure 1121a, and at least a portion of the first connection structure 1121a is connected to the first position 1401.

The first sub-tab is a part of the first tab 112a. The first sub-tab is provided on the body portion 111. The plurality of first sub-tabs constitute the first tab 112a.

The first connection structure 1121a is a part of the first tab 112a, and the plurality of first sub-tabs are connected to form the first connection structure 1121a. This allows for a high integrity of the first tab 112a, facilitating connection between the first tab 112a and the first adapter 14a and conduction between the first tab 112a and the first adapter 14a.

Based on the above structure, in the process of conductively connecting the first tab 112a to the first adapter 14a, the plurality of first sub-tabs of the first tab 112a are first connected to form the first connection structure 1121a, and then the first connection structure 1121a is connected to the first position 1401 of the first adapter 14a, such that the first connection structure 1121a forms a conductive connection with the first adapter 14a.

The plurality of first sub-tabs of the first tab 112a are connected to form the first connection structure 1121a, and then the first connection structure 1121a is conductively connected to the first position 1401, so that the first tab 112a can be effectively conductively connected to the first adapter 14a.

In some embodiments, the plurality of first sub-tabs are connected by welding to form the first connection structure 1121a, that is, the plurality of first sub-tabs are pre-welded to form the first connection structure 1121a.

In some embodiments, the plurality of first sub-tabs may be pre-welded by ultrasonic welding to form the first connection structure 1121a, and the first connection structure 1121a may be laser-welded to the first position 1401 of the first adapter 14a. Certainly, the plurality of first sub-tabs may alternatively be connected by other manners to form the first connection structure 1121a, and the first connection structure 1121a and the first adapter 14a may alternatively be conductively connected to each other by other manners.

In some embodiments, when the plurality of first sub-tabs are connected to form the first connection structure 1121a, the plurality of first sub-tabs may also be simultaneously connected to the first adapter 14a. This can enhance the connection strength between the first tab 112a and the first adapter 14a, helping to improve the conduction stability between the first tab 112a and the first adapter 14a.

In some embodiments, as shown in FIG. 5, the first heat-insulating member 151 is arranged to avoid the first connection structure 1121a. Specifically, the first heat-insulating member 151 is arranged to avoid a projection of the first connection structure 1121a on the side of the first adapter 14a facing the body portion 111.

This can reduce the heat-insulating structure 15 on the basis that the heat-insulating structure 15 can reduce heat conduction between the first adapter 14a and the body portion 111.

In some embodiments, referring to FIG. 3 to FIG. 5 in conjunction with other drawings, a total area of all the first positions 1401 of the first adapter 14a accounts for 10% to 25% of an area of the side of the first adapter 14a facing the body portion 111.

It can be understood that the first position 1401 is located on the side of the first adapter 14a facing the body portion 111. The area of the first position 1401 accounts for 11%, 12%, 15%, 16%, 18%, 20%, 21%, 22%, 24%, or the like of the area of the side of the first adapter 14a facing the body portion 111.

Such a configuration ensures that the first position 1401 has an appropriate area, that is, a projection of a connection mark between the first tab 112a and the first adapter 14a on the first adapter 14a has an appropriate area. This allows a connection position between the first adapter 14a and the first tab 112a to have a high current-carrying capacity, allowing the first adapter 14a to be at a lower temperature when current normally flows through the first adapter 14a, thereby reducing the risk of melting of the separator of the body portion 111. Additionally, the first adapter 14a can also reserve some space for providing a fuse region, enabling effective fusing of the fuse region in the event of a short circuit in the first adapter 14a.

The fuse region refers to a region of the first adapter 14a that fuses during a short circuit, thereby disconnecting the first adapter 14a to provide a protective function.

In some embodiments, referring to FIG. 3 to FIG. 5 in conjunction with other drawings, the first adapter 14a is provided with a positioning through-hole; the first electrode terminal 13a is inserted into the positioning through-hole; and a portion of the heat-insulating structure 15 is provided on a side of the first electrode terminal 13a facing the body portion 111, that is, the first heat-insulating member 151 of the heat-insulating structure 15 is also provided on the side of the first electrode terminal 13a facing the body portion 111.

The positioning through-hole is a through-hole running through the first adapter 14a. For ease of description, this positioning through-hole is referred to as a first positioning through-hole 1403. The first electrode terminal 13a is inserted into the first positioning through-hole 1403, enabling positioning between the first electrode terminal 13a and the first adapter 14a, thereby facilitating conductive connection between the first electrode terminal 13a and the first adapter 14a.

As shown in FIG. 4, the first positioning through-hole 1403 runs through the first adapter 14a along the first direction Y. Thus, when the first electrode terminal 13a is inserted into the first positioning through-hole 1403, one end of the first electrode terminal 13a along the first direction Y faces the body portion 111, resulting in a risk of scorching or even melting of the separator caused by direct contact between the first electrode terminal 13a and the body portion 111.

The heat-insulating structure 15 is provided on the side of the first electrode terminal 13a facing the body portion 111, so that the first electrode terminal 13a can be separated from the body portion 111. On one hand, this mitigates the issue of the first electrode terminal 13a scorching or even melting the separator, reducing the risk of a short circuit in the electrode assembly 11. On the other hand, when the heat-insulating structure 15 has insulating properties, insulation between the first electrode terminal 13a and the body portion 111 can also be achieved, mitigating the issue of a short circuit in the battery cell 10 caused by contact between the first electrode terminal 13a and the body portion 111.

It should be additionally noted that when the first electrode terminal 13a does not protrude beyond the first positioning through-hole 1403 such that there is no risk of direct contact between the first electrode terminal 13a and the body portion 111, the heat-insulating structure 15 may alternatively not be provided on the side of the first electrode terminal 13a facing the body portion 111.

In some embodiments, referring to FIG. 3 and FIG. 6 in conjunction with other drawings, FIG. 6 is an enlarged view of portion B in FIG. 3. The electrode assembly 11 further includes a second tab 112b; the first tab 112a and the second tab 112b are spaced apart on the body portion 111; the battery cell 10 further includes a second electrode terminal 13b and a second adapter 14b; and the second adapter 14b is conductively connected to the second tab 112b and the second electrode terminal 13b.

The second electrode terminal 13b is also the above-mentioned electrode terminal 13, which is a component with conductive properties and may include but is not limited to a pole. The second electrode terminal 13b serves as a current transmission terminal of the battery cell 10 for transmitting current.

The second adapter 14b is the above-mentioned adapter 14, which is a component with conductive properties and may include but is not limited to a copper bar. The second adapter 14b is configured to achieve adapting connection between the second electrode terminal 13b and the second tab 112b, indirectly achieving conductive connection between the second electrode terminal 13b and the second tab 112b.

The manner of conductive connection between the second tab 112b and the second adapter 14b may refer to the manner of conductive connection between the first tab 112a and the first adapter 14a, and the manner of conductive connection between the second adapter 14b and the second electrode terminal 13b may also refer to the manner of conductive connection between the first electrode terminal 13a and the first adapter 14a. Details are not repeated here.

Such a configuration allows for indirect conductive connections between the first tab 112a and the first electrode terminal 13a and between the second tab 112b and the second electrode terminal 13b through the adapter 14, facilitating the assembly of the battery cell 10.

In some embodiments, referring to FIG. 3 in conjunction with other drawings, the first tab 112a is a positive electrode tab, and the second tab 112b is a negative electrode tab.

Correspondingly, the first electrode terminal 13a is a positive electrode terminal, and the first adapter 14a is a positive electrode adapter.

It should be noted that during use of the battery cell 10, the heat generated by the positive electrode adapter is higher compared to that of a negative electrode adapter, making it more likely to scorch or even melt the separator and resulting in a higher risk of a short circuit in the electrode assembly 11 caused by contact between the first adapter 14a and the body portion 111.

The heat-insulating structure 15 is provided on the first adapter 14a, which is configured to be conductively connected to the positive electrode tab and the positive electrode terminal, so that the issue of the first adapter 14a scorching or even melting the separator can be mitigated, thereby effectively mitigating the issue of a short circuit in the battery cell 10.

In some embodiments, referring to FIG. 3 to FIG. 6 in conjunction with other drawings, a portion of the heat-insulating structure 15 is provided on a side of the second adapter 14b facing the body portion 111.

It can be understood that the heat-insulating structure 15 may further include a second heat-insulating member 152, where the second heat-insulating member 152 is the portion of the heat-insulating structure 15 provided on the side of the second adapter 14b facing the body portion 111. That is, the second heat-insulating member 152 is a part of the heat-insulating structure 15 and also has heat-insulating functionality.

As shown in FIG. 3 and FIG. 6, the second tab 112b is also provided at one end of the body portion 111 along the first direction Y. The first tab 112a and the second tab 112b may be provided at two opposite ends of the body portion 111 along the first direction Y or provided at the same end of the body portion 111 along the first direction Y. Additionally, in the first direction Y, the second adapter 14b is provided between the second tab 112b and the second electrode terminal 13b, and the second adapter 14b faces the body portion 111 along the first direction Y. The second heat-insulating member 152 is provided on the side of the second adapter 14b facing the body portion 111 along the first direction Y.

Such a configuration allows the heat-insulating structure 15 to reduce heat conduction between the second adapter 14b and the body portion 111, mitigating the issue of scorching or even melting of the separator caused by direct contact between the second adapter 14b and the body portion 111.

Additionally, when the heat-insulating structure 15 also has insulating properties, the risk of a short circuit in the battery cell 10 caused by conduction between the second adapter 14b and the body portion 111 can also be reduced.

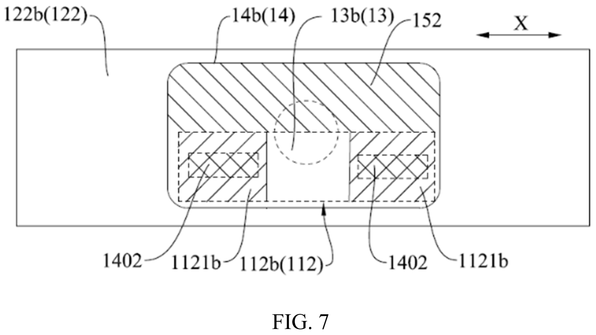

In some embodiments, referring to FIG. 3, FIG. 6, and FIG. 7 in conjunction with other drawings, FIG. 7 is a top view of the housing 12, second adapter 14b, second electrode terminal 13b, and second heat-insulating member 152 of the battery cell 10 provided by some embodiments of this application, specifically a view in a direction from the first adapter 14a to the second adapter 14b along the first direction Y. In the top view, projections of the second electrode terminal 13b, the second tab 112b, a second connection structure 1121b, and a second position 1402 on the second adapting piece are shown via dashed lines. The second adapter 14b is provided with the second position 1402, the second tab 112b is connected to the second position 1402, and the heat-insulating structure 15 is arranged to avoid the second position 1402.

The second position 1402 refers to a position of the second adapter 14b configured to be connected to the second tab 112b. Specifically, the second tab 112b is conductively connected to a portion of the second adapter 14b located at the second position 1402.

When the second adapter 14b is welded to the second tab 112b, a weld mark formed by welding the second adapter 14b to the second tab 112b is located at the second position 1402.

This can reduce the heat-insulating structure 15 and facilitate the provision of the heat-insulating structure 15 on the second adapter 14b on the basis that the heat-insulating structure 15 can reduce heat conduction between the second adapter 14b and the body portion 111.

In some embodiments, referring to FIG. 3, FIG. 6, and FIG. 7 in conjunction with other drawings, the second adapter 14b is provided with a plurality of second positions 1402 spaced apart, and the second tab 112b is connected to the plurality of second positions 1402.

The second tab 112b is conductively connected to portions corresponding to the plurality of second positions 1402 of the second adapter 14b, so that the second tab 112b is connected to a plurality of different positions of the second adapter 14b. Thus, on one hand, this allows for a more uniform current distribution between the second adapter 14b and the second tab 112b, thereby reducing the current flow temperature of the second adapter 14b, mitigating the issue of heat concentration caused by current concentration in the second adapter 14b, and consequently mitigating the issue of scorching or melting of the separator of the body portion 111 caused by excessive heat from the second adapter 14b, thereby reducing the risk of a short circuit in the battery cell 10. On the other hand, this allows for a high current-carrying capacity between the second adapter 14b and the second tab 112b. Additionally, this can reduce the dimension of the second tab 112b in the first direction Y, thereby helping to increase the energy density of the battery cell 10.

In some embodiments, to facilitate conductive connection between the second tab 112b and the second adapter 14b, the second position 1402 is located on the side of the second adapter 14b facing the body portion 111.

In some embodiments, referring to FIG. 7 in conjunction with other drawings, at least a portion of the second electrode terminal 13b is located between two second positions 1402.

It can be understood that a connection line (straight line) between the two second positions 1402 can pass through the second electrode terminal 13b.

As an example, as shown in FIG. 7, two second positions 1402 are spaced apart along the second direction X. A portion of the second electrode terminal 13b is located between the two second positions 1402, such that one second position 1402, a portion of the second electrode terminal 13b, and the other second position 1402 are sequentially distributed along the second direction X, thereby allowing the two second positions 1402 to be respectively provided on two opposite sides of the second electrode terminal 13b along the second direction X. Certainly, in other examples, the two second positions 1402 may alternatively be spaced apart along a direction intersecting both the first direction Y and the second direction X, and at least a portion of the second electrode terminal 13b is located between the two second positions 1402.

Such a configuration ensures that the plurality of second positions 1402 of the second adapter 14b connected to the second tab 112b are more dispersed, resulting in a more uniform current within the battery cell 10, thereby reducing the current flow temperature of the second adapter 14b, and consequently reducing the risk of melting of the separator caused by the second adapter 14b.

In some embodiments, referring to FIG. 7 in conjunction with other drawings, the second tab 112b includes a plurality of second sub-tabs, the plurality of second sub-tabs are connected to form a second connection structure 1121b, and at least a portion of the second connection structure 1121b is connected to the second position 1402.

The second sub-tab is a part of the second tab 112b. The second sub-tab is provided on the body portion 111. The plurality of second sub-tabs constitute the second tab 112b.

The second connection structure 1121b is a part of the second tab 112b, and the plurality of second sub-tabs are connected to form the second connection structure 1121b. This allows for a high integrity of the second tab 112b, facilitating connection between the second tab 112b and the second adapter 14b and conduction between the second tab 112b and the second adapter 14b.

Based on the above structure, in the process of conductively connecting the second tab 112b to the second adapter 14b, the plurality of second sub-tabs of the second tab 112b are first connected to form the second connection structure 1121b, and then the second connection structure 1121b is connected to the second position 1402 of the second adapter 14b, such that the second connection structure 1121b forms a conductive connection with the second adapter 14b.

The plurality of second sub-tabs of the second tab 112b are connected to form the second connection structure 1121b, and then the second connection structure 1121b is conductively connected to the second position 1402, so that the second tab 112b can be effectively conductively connected to the second adapter 14b.

In some embodiments, the plurality of second sub-tabs of the second tab 112b are connected by welding to form the second connection structure 1121b, that is, the plurality of second sub-tabs of the second tab 112b are pre-welded to form the second connection structure 1121b.

In some embodiments, the second tab 112b may be pre-welded by ultrasonic welding to form the second connection structure 1121b, and the second connection structure 1121b may be laser-welded to the second position 1402 of the second adapter 14b. Certainly, the second tab 112b may be pre-connected by other manners, and the second connection structure 1121b and the second adapter 14b may alternatively be conductively connected to each other by other manners.

In some embodiments, when the plurality of second sub-tabs of the second tab 112b are connected to form the second connection structure 1121b, the plurality of second sub-tabs may also be simultaneously connected to the second adapter 14b. This can enhance the connection strength between the second tab 112b and the second adapter 14b, helping to improve the conduction stability between the second tab 112b and the second adapter 14b.

In some embodiments, as shown in FIG. 7, the second heat-insulating member 152 is arranged to avoid the second connection structure 1121b. Specifically, the second heat-insulating member 152 is arranged to avoid a projection of the second connection structure 1121b on the side of the second adapter 14b facing the body portion 111.

This can reduce the heat-insulating structure 15 on the basis that the heat-insulating structure 15 can reduce heat conduction between the second adapter 14b and the body portion 111.

In some embodiments, referring to FIG. 7 in conjunction with other drawings, the plurality of second sub-tabs of the second tab 112b are connected to form a plurality of second connection structures 1121b spaced apart, and each second connection structure 1121b is connected to a corresponding second position 1402.

The plurality of second sub-tabs of the second tab 112b are connected to form the plurality of second connection structures 1121b, such that each second connection structure 1121b is connected to a respective second position 1402 of the second adapter 14b, allowing for a more uniform current distribution between the second adapter 14b and the second tab 112b, thereby reducing the current flow temperature of the second adapter 14b, and consequently reducing the risk of a short circuit in the battery cell 10 caused by melting of the separator.

In some embodiments, referring to FIG. 3, FIG. 6, and FIG. 7 in conjunction with other drawings, a total area of all the second positions 1402 of the second adapter 14b accounts for 10% to 25% of an area of the side of the second adapter 14b facing the body portion 111.

It can be understood that the second position 1402 is located on the side of the second adapter 14b facing the body portion 111. The area of the second position 1402 accounts for 11%, 12%, 15%, 16%, 18%, 20%, 21%, 22%, 24%, or the like of the area of the side of the second adapter 14b facing the body portion 111.

Such a configuration ensures that the second position 1402 has an appropriate area, that is, a projection of a connection mark between the second tab 112b and the second adapter 14b on the second adapter 14b has an appropriate area. This allows a connection position between the second adapter 14b and the second tab 112b to have a high current-carrying capacity, allowing the second adapter 14b to be at a lower temperature when current normally flows through the second adapter 14b, thereby reducing the risk of melting of the separator of the body portion 111. Additionally, the second adapter 14b can also reserve some space for providing a fuse region, enabling effective fusing of the fuse region in the event of a short circuit in the second adapter 14b.

In some embodiments, as shown in FIG. 3 and FIG. 6, the second adapter 14b may alternatively be provided with the above-mentioned positioning through-hole to position the second electrode terminal 13b, thereby facilitating conductive connection between the second electrode terminal 13b and the second adapter 14b. The positioning through-hole on the second adapter 14b is referred to as a second positioning through-hole 1404. Additionally, the heat-insulating structure 15 may also be provided on the side of the second electrode terminal 13b facing the body portion 111, with specific details referring to the related description of the foregoing first positioning through-hole 1403. Details are not repeated here.

In some embodiments, referring to FIG. 3 in conjunction with other drawings, the battery cell 10 further includes a housing 12. The electrode assembly 11, the first adapter 14a, the second adapter 14b, and the heat-insulating structure 15 are all disposed within the housing 12. The first tab 112a and the second tab 112b are respectively provided at two opposite ends of the body portion 111 along the first direction Y. The housing 12 is provided with a first wall 122a and a second wall 122b at two opposite ends along the first direction Y. The first electrode terminal 13a is provided on the first wall 122a, and the second electrode terminal 13b is provided on the second wall 122b. In the first direction Y, the first adapter 14a is provided between the first wall 122a and the first tab 112a, and the second adapter 14b is provided between the second wall 122b and the second tab 112b.

It can be understood that the first adapter 14a, the first electrode terminal 13a, and the first wall 122a are all provided at one end, provided with the first tab 112a, of the electrode assembly 11 along the first direction Y, and the first adapter 14a is provided between the first tab 112a and the first wall 122a along the first direction Y. Such a configuration facilitates conductive connection of the first adapter 14a between the first tab 112a and the first electrode terminal 13a.

The second adapter 14b, the second electrode terminal 13b, and the second wall 122b are all provided at one end, provided with the second tab 112b, of the electrode assembly along the first direction Y, and the second adapter 14b is provided between the second tab 112b and the second wall 122b along the first direction Y. Such a configuration facilitates conductive connection of the second adapter 14a between the second tab 112b and the second electrode terminal 13b.

Adopting the above technical solution makes the overall arrangement of the battery cell 10 reasonable.

Based on the above design, referring to FIG. 2, an embodiment of this application further provides a battery 100, where the battery 100 includes the battery cell 10. The battery cell 10 in this embodiment is the same as the battery cell 10 in the previous embodiment, with specific details referring to the related description of the battery cell 10 in the previous embodiment. Details are not repeated here.

The battery 100 provided by the embodiment of this application adopts the above-mentioned battery cell 10, so that the issue of melting of a separator of the battery cell 10 can be mitigated, thereby reducing the risk of a short circuit in the battery 100.

Based on the above design, referring to FIG. 1, an embodiment of this application further provides an electric apparatus, where the electric apparatus includes the battery cell 10 or the battery 100. The battery cell 10 and the battery 100 in this embodiment are the same as the battery cell 10 and the battery 100 in the previous embodiment, with specific details referring to the related description of the battery cell 10 and the battery 100 in the previous embodiment. Details are not repeated here.

The electric apparatus provided by this embodiment of this application adopts the above-mentioned battery cell 10 or battery 100, so that the issue of melting of a separator of the battery cell 10 can be mitigated, thereby reducing the risk of a short circuit in the battery 100.

As one embodiment of this application, as shown in FIG. 3 to FIG. 7, the battery cell 10 includes an electrode assembly 11, a first electrode terminal 13a, a second electrode terminal 13b, a first adapter 14a, a second adapter 14b, and a first heat-insulating member 151. The electrode assembly 11 includes a body portion 111, a first tab 112a, and a second tab 112b, where the first tab 112a and the second tab 112b are provided at one end or two opposite ends of the body portion 111 along a first direction Y. The first adapter 14a is in welding conduction with the first electrode terminal 13a, and the first adapter 14a is in welding conduction with the first tab 112a. The second adapter 14b is in welding conduction with the second electrode terminal 13b, and the second adapter 14b is in welding conduction with the second tab 112b. The first heat-insulating member 151 is provided on a side of the first adapter 14a facing the body portion 111 along the first direction Y. The first heat-insulating member 151 is arranged to avoid weld marks of the first tab 112a and the first adapter 14a. The first tab 112a is welded to the first adapter 14a to form a plurality of weld marks spaced apart. The second tab 112b is welded to the second adapter 14b to form a plurality of weld marks. At least a portion of the second electrode terminal 13b is located between the plurality of weld marks.

The above are merely preferred embodiments of this application and are not intended to limit this application. Any modifications, equivalent replacements, improvements, and the like made within the spirit and principles of this application shall be included within the scope of protection of this application.

## Claims

1. A battery cell (10), comprising:
an electrode assembly (11) comprising a body portion (111) and a first tab (112a) provided on the body portion (111);
a first electrode terminal (13a);
a first adapter (14a) conductively connected to the first tab (112a) and the first electrode terminal (13a); and
a heat-insulating structure (15) with at least a portion provided on a side of the first adapter (14a) facing the body portion (111).

2. The battery cell (10) according to claim 1, wherein a thermal conductivity of the heat-insulating structure (15) is ≤ 0.7 W/m·K.

3. The battery cell (10) according to claim 1 or 2, wherein the heat-insulating structure (15) has insulating properties.

4. The battery cell (10) according to any one of claims 1 to 3, wherein the heat-insulating structure (15) comprises one or more of a copolymer of perfluoropropyl vinyl ether and polytetrafluoroethylene, mica, ceramic, glass fiber, carbon fiber, a carbon-carbon composite material, or pre-oxidized fiber aerogel.

5. The battery cell (10) according to any one of claims 1 to 4, wherein the heat-insulating structure (15) is a coating layer.

6. The battery cell (10) according to any one of claims 1 to 5, wherein the first adapter (14a) is provided with a first position (1401), the first tab (112a) is connected to the first position (1401), and the heat-insulating structure (15) is arranged to avoid the first position (1401).

7. The battery cell (10) according to claim 6, wherein the first adapter (14a) is provided with a plurality of first positions (1401) spaced apart, and the first tab (112a) is connected to the plurality of first positions (1401).

8. The battery cell (10) according to claim 6 or 7, wherein the battery cell (10) further comprises a housing (12); the electrode assembly (11), the first adapter (14a), and the heat-insulating structure (15) are all disposed within the housing (12); the housing (12) is provided with an electrolyte injection hole (1201); and the first position (1401) is located on a side of the first electrode terminal (13a) away from the electrolyte injection hole (1201).

9. The battery cell (10) according to claim 8, wherein the housing (12) is provided with a first wall (122a), and the electrolyte injection hole (1201) and the first electrode terminal (13a) are spaced apart on the first wall (122a).

10. The battery cell (10) according to any one of claims 6 to 9, wherein the first tab (112a) comprises a plurality of first sub-tabs, the plurality of first sub-tabs are connected to form a first connection structure (1121a), and at least a portion of the first connection structure (1121a) is connected to the first position (1401).

11. The battery cell (10) according to any one of claims 6 to 10, wherein a total area of all the first positions (1401) accounts for 10% to 25% of an area of the side of the first adapter (14a) facing the body portion (111).

12. The battery cell (10) according to any one of claims 1 to 11, wherein the first adapter (14a) is provided with a positioning through-hole (1403); the first electrode terminal (13a) is inserted into the positioning through-hole (1403); and a portion of the heat-insulating structure (15) is provided on a side of the first electrode terminal (13a) facing the body portion (111).

13. The battery cell (10) according to any one of claims 1 to 12, wherein the electrode assembly (11) further comprises a second tab (112b) provided on the body portion (111); the battery cell (10) further comprises a second electrode terminal (13b) and a second adapter (14b); and the second adapter (14b) is conductively connected to the second tab (112b) and the second electrode terminal (13b).

14. The battery cell (10) according to claim 13, wherein the first tab (112a) is a positive electrode tab, and the second tab (112b) is a negative electrode tab.

15. The battery cell (10) according to claim 13 or 14, wherein a portion of the heat-insulating structure (15) is provided on a side of the second adapter (14b) facing the body portion (111).

16. The battery cell (10) according to any one of claims 13 to 15, wherein the second adapter (14b) is provided with a second position (1402), the second tab (112b) is connected to the second position (1402), and the heat-insulating structure (15) is arranged to avoid the second position (1402).

17. The battery cell (10) according to claim 16, wherein the second adapter (14b) is provided with a plurality of second positions (1402) spaced apart, and the second tab (112b) is connected to the plurality of second positions (1402).

18. The battery cell (10) according to claim 17, wherein at least a portion of the second electrode terminal (13b) is located between two second positions (1402).

19. The battery cell (10) according to any one of claims 16 to 18, wherein the second tab (112b) comprises a plurality of second sub-tabs, the plurality of second sub-tabs are connected to form a second connection structure (1121b), and at least a portion of the second connection structure (1121b) is connected to the second position (1402).

20. The battery cell (10) according to claim 19, wherein the plurality of second sub-tabs are connected to form a plurality of second connection structures (1121b) spaced apart, and each second connection structure (1121b) is connected to a corresponding second position (1402).

21. The battery cell (10) according to any one of claims 16 to 20, wherein a total area of all the second positions (1402) accounts for 10% to 25% of an area of the side of the second adapter (14b) facing the body portion (111).

22. The battery cell (10) according to any one of claims 13 to 21, wherein the battery cell (10) further comprises a housing (12); the electrode assembly (11), the first adapter (14a), the second adapter (14b), and the heat-insulating structure (15) are all disposed within the housing (12); and
the first tab (112a) and the second tab (112b) are respectively provided at two opposite ends of the body portion (111) along a first direction (Y); the housing (12) is provided with a first wall (122a) and a second wall (122b) at the two opposite ends along the first direction (Y); the first electrode terminal (13a) is provided on the first wall (122a); the second electrode terminal (13b) is provided on the second wall (122b); and along the first direction (Y), the first adapter (14a) is provided between the first wall (122a) and the first tab (112a), and the second adapter (14b) is provided between the second wall (122b) and the second tab (112b).

23. A battery (100), comprising the battery cell (10) according to any one of claims 1 to 22.

24. An electric apparatus, comprising the battery cell (10) according to any one of claims 1 to 22 or the battery (100) according to claim 23.
